Europäisches Patentamt

European Patent Office

Office européen des brevets

(11) Veröffentlichungsnummer : **0 169 430**
**B1**

(12) **EUROPÄISCHE PATENTSCHRIFT**

(45) Veröffentlichungstag der Patentschrift :
03.01.90

(51) Int. Cl.⁵ : **C 02 F   1/52**, C 02 F   1/28

(21) Anmeldenummer : **85108440.0**

(22) Anmeldetag : **08.07.85**

(54) **Verfahren zur Klärung von verfärbten Abwässern.**

(30) Priorität : 23.07.84 YU 1303/84

(43) Veröffentlichungstag der Anmeldung :
29.01.86 Patentblatt 86/05

(45) Bekanntmachung des Hinweises auf die Patenterteilung : 03.01.90 Patentblatt 90/01

(84) Benannte Vertragsstaaten :
AT BE CH DE FR GB IT LI LU NL SE

(56) Entgegenhaltungen :
EP—A— 0 044 058
GB—A— 1 398 831
GB—A— 1 551 255
US—A— 4 163 715

(73) Patentinhaber : Smolcic, Vladislav Dr. Dipl.-Ing.
Slaviceva 2
YU-58000 Split (YU)

Mimica, Planko
Punjanke 40b
YU-58000 Split (YU)

(72) Erfinder : Smolcic, Vladislav Dr. Dipl.-Ing.
Slaviceva 2
YU-58000 Split (YU)
Erfinder : Mimica, Planko
Punjanke 40b
YU-58000 Split (YU)

(74) Vertreter : Freiherr von Schorlemer, Reinfried, Dipl.-Phys.
Patentanwalt Brüder-Grimm-Platz 4
D-3500 Kassel (DE)

## Beschreibung

Die Erfindung betrifft ein Verfahren zur Klärung von gefärbten Abwässern, z. B. Abwässern der Textilindustrie oder ähnlicher Industriebetriebe, die sowohl feine dispergierte Teilchen wie Textilfasern od. dgl. als auch in Wasser gelöste organische Substanzen wie z. B. Farbstoffe, Waschmittel od. dgl. enthalten.

Die Abwässer verschiedener Industriebetriebe, insbesondere der Textilindustrie, z. B. einer Färberei, enthalten in der Regel bestimmte Mengen sowohl an in Wasser suspendierten Stoffen als auch an im Wasser gelösten Stoffen. Dabei kann es sich z. B. um feine dispergierte Teilchen wie Textilfasern od. dgl. einerseits und um gelöste Farbstoffe, Waschmittel, Seifen und verschiedene organische Substanzen andererseits handeln.

Die suspendierten Stoffe können durch Flockung (Koagulation) und Ablagerung (Sedimentation) beseitigt werden. Dabei werden zur Förderung der Koagulation und Ablagerung meistens Flockungsmittel wie z. B. Aluminiumsulphat, Calciumchlorid, Eisenchlorid und Eisensulphat verwendet. Da diese Flockungsmittel zwar wirkungsvoll bei der Beseitigung der suspendierten Stoffe sind, im Hinblick auf die Beseitigung der gelösten Substanzen jedoch keinerlei Wirkung haben, wird zur Beseitigung der gelösten Stoffe meistens zusätzlich ein Adsorptionsmittel, insbesondere Aktivkohle, benötigt, das nach der Entfernung der suspendierten Stoffe angewendet wird. Aus diesem Grund müssen bei der Klärung von gefärbten Abwässern zwei Verfahrensstufen hintereinander durchgeführt werden, nämlich eine erste zur Entfernung der suspendierten Stoffe durch Flockung und Sedimentation und eine zweite zur Entfernung der Farbstoffe und der anderen organischen Stoffe durch Adsorption mit Aktivkohle. Derartige Klärverfahren sind daher kompliziert und aufwendig. Hinzukommt, daß die üblichen Flockungsmittel sowie Aktivkohle vergleichsweise kostspielig sind, wodurch die Klärung gefärbter Abwässer weiter verteuert wird.

Es ist auch bereits bekannt (EP-A-0 044 058), gelöste oder kolloidal dispergierte organische Stoffe aus Fabrikationskreislauf- und Abwässern der papiererzeugenden und verwandter Industrien mit Hilfe eines sauer aktivierten Tonminerals durch Adsorption und danach erfolgende Filtration oder Zentrifugierung bei einem pH-Wert von ca. 4 bis 7 zu entfernen. Das aktivierte Tonmineral wird dabei dem in wässriger Aufschlämmung befindlichen, zur Produktion herangezogenen Stoffgemisch zugesetzt und dann in diesem belassen oder als Füllstoff wiederverwendet.

Demgegenüber liegt der Erfindung die Aufgabe zugrunde, das mit Flockung und Sedimentation arbeitende Verfahren der zuerst beschriebenen Art dahingehend zu verbessern, daß die Flockung und Adsorption in einer einzigen Verfahrensstufe durchgeführt und das Verfahren dadurch insgesamt einfacher und preisgünstiger gestaltet werden kann.

Zur Lösung dieser Aufgabe ist die Erfindung dadurch gekennzeichnet, daß die Abwässer mit einem durch eine Säure aktivierten Flockungs- und Adsorptionsmittel, bestehend aus Tonerde oder einem Gemisch von Tonerde und Bauxit oder dem bei der Elektrolyse von Aluminium anfallenden Schlamm oder einem Gemisch dieses Schlamms und Tonerde in einer Stufe behandelt, in der die Koagulation und die Adsorption der im Abwasser suspendierten Teilchen und der gelösten Substanzen gleichzeitig ablaufen, und dann die geklärten Abwässer von dem die suspendierten und gelösten Stoffe des Abwassers enthaltenden dickflüssigen Schlamm in einer Sedimentations-Einrichtung entfernt werden.

Die Erfindung bringt den Vorteil mit sich, daß sämtliche im Wasser dispergierten Stoffe sowie einige im Wasser gelöste organische Substanzen, z. B. Farben, praktisch in einer einzigen Verfahrensstufe entfernt werden können, die eine Flockung, Adsorption und Ablagerung umfaßt. Ein weiterer wesentlicher Vorteil besteht darin, daß das erfindungsgemäße Verfahren mit Hilfe von natürlichen, häufig als Abfall erhaltenen Rohstoffen durchgeführt werden kann, die sowohl zur Ausflockung als auch zur Adsorption geeignet sind.

Das erfindungsgemäße Verfahren beruht zunächst auf der Erkenntnis, daß der bei der Verarbeitung und Elektrolyse von Aluminium anfallende Schlamm sowie Tonerde und Bauxit zur Ausflockung und Adsorption geeignet sind. Um diese Rohstoffe jedoch für die Klärung der Abwässer brauchbar zu machen, müssen sie vorher aktiviert werden, wozu ihnen z. B. Salz- oder Schwefelsäure beigemischt wird. Die auf diese Weise aktivierten Rohstoffe werden in Form einer wässrigen Suspension den Abwässern beigegeben. Zusätzlich wird den Abwässern noch eine Kalksuspension beigemischt, die zur Einstellung eines optimalen pH-Wertes dient und die Ausflockung fördert bzw. möglich macht. Die hierdurch entstehenden Flocken adsorbieren unter ständigem Rühren und Mischen viele lösbare Substanzen, insbesondere Farben, Waschmittel od. dgl. aus dem Abwasser.

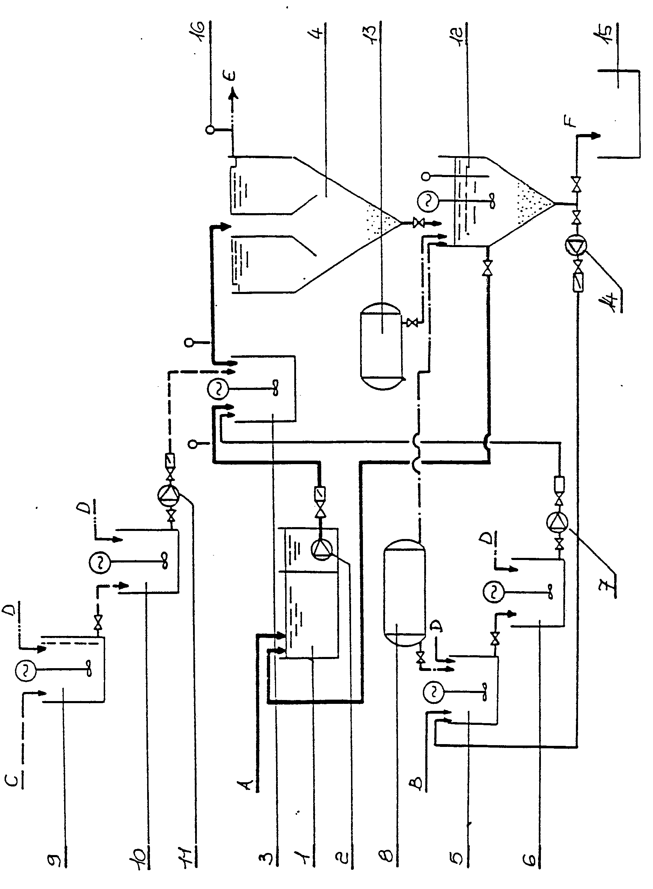

Eine beispielsweise Vorrichtung zur Durchführung des erfindungsgemäßen Verfahrens ist in der beiliegenden Zeichnung dargestellt, die nachfolgend erläutert wird. Danach wird verfärbtes Abwasser aus der Fabrik zunächst in ein Egalisierbecken 1 geleitet, von wo es in eine Pumpenmulde überläuft, in der eine Pumpe 2 untergebracht ist, die das egalisierte Wasser in ein Becken 3 pumpt. In dem Egalisierbecken 1 wird das mehr oder weniger verschmutzte Abwasser so gemischt, daß es möglichst immer ungefähr dieselbe Qualität besitzt und dadurch an die vorgewählte Dosierung im Becken 3 angepaßt ist. Die Qualität des Abwassers wird mit Standardmethoden überwacht. Das Egalisierbecken 1 kann ein übliches, in der Fabrik bereits vorhandenes Egalisierbecken sein.

In das Becken 3 wird außerdem mittels einer Dosierpumpe 7 ein Flockungs- und Adsorptionsmittel eingeleitet. Dieses Flockungs- und Adsorptionsmittel wird dadurch hergestellt, daß Tonerde oder ein Gemisch aus Tonerde und Bauxit oder der bei der Elektrolyse von Aluminium abfallende Schlamm oder ein Gemisch dieses Schlamms mit Tonerde über eine Leitung B in ein Gefäß 5 geleitet und in diesem mit Salz- oder Schwefelsäure aktiviert und aufbereitet wird. Beispielsweise wird ein Gemisch aus Tonerde und Bauxit im Verhältnis 2 : 1 verwendet, wobei das Bauxit in Teilchen zerkleinert wird, die kleiner als 0,2 mm sind. Dieses Gemisch wird beispielsweise mit einer 30 %-igen Salzsäure vermischt, die sich in einem Vorratsbehälter 8 befindet und wobei das Mischungsverhältnis einem Verhältnis von 1 ml 30 %-iger Salzsäure zu 4 g des Rohstoffgemischs entspricht. Die Vermischung erfolgt unter ständigem Rühren. Beispielsweise werden 400 g bzw. ca. 200 ml des Flockungsund Adsorptionsmittels mit 100 ml 30 %-iger Salzsäure und 200 ml Leitungswasser aus einer Leitung D zusammengegeben.

Die auf diese Weise für die Adsorption aktivierte Mischung wird dann in ein Gefäß 6 geleitet, in dem sie unter ständigem Rühren mit Wasser aus der Wasserleitung D in eine wässrige Dispersion verwandelt wird. Dabei werden beispielsweise die 500 ml aus dem Gefäß 5 mit 500 ml Wasser vermischt, so daß sich eine pumpfähige Suspension ergibt, die pro 1 000 ml etwa 400 g an Flockungs- und Adsorptionsmittel enthält. In Abhängigkeit von der Art der verwendeten Dosierpumpe 7 können andere Mischungsverhältnisse vorgesehen werden, um eine pumpfähige Suspension zu erhalten.

Schließlich wird noch eine z. B. 10 %-ige Kalksuspension in das Becken 3 geleitet. Diese wird auf übliche Weise mittels Gefäßen 9 und 10 aufbereitet, indem im Gefäß 9 zunächst Kalkmilch aus Kalk und Wasser z. B. im Gewichtsverhältnis 1 : 5 hergestellt und dann im Gefäß 10 eine zusätzliche Verdünnung der Kalkmilch vorgenommen wird. Das Wasser wird dabei jeweils der Wasserleitung D entnommen. Zur Beförderung der 10 %-igen Kalksuspension aus dem Gefäß 10 in das Becken 3 dient eine Pumpe 11, durch die gleichzeitig eine derartige Dosierung vorgenommen wird, daß der pH-Wert im Becken 3 auf einen Wert von ca. 8,5 eingestellt wird, um dadurch optimale Voraussetzungen für die Koagulation zu schaffen. Im Becken 3 werden die Materialien unter mäßigem Mischen bzw. Rühren so lange behandelt, daß eine Kontaktzeit von wenigstens etwa fünfzehn Minuten erreicht wird.

Nach einer ausreichend langen Ausflockungs- und Adsorptionsdauer, wobei die Koagulation und die Adsorption der im Abwasser suspendierten Teilchen bzw. der im Abwasser gelösten Farbstoffe, Waschmittel usw. gleichzeitig ablaufen, wird das Abwasser durch einen Überlauf beispielsweise in eine vertikale Sedimentations-Einrichtung 4 überführt, wo sich ein die suspendierten Teilchen sowie die gelösten Stoffe des Abwassers enthaltender, dickflüssiger Schlamm am Boden absetzt, während das aufbereitete und ungefärbte, d. h. geklärte Wasser durch einen Überlauf in eine Leitung E gelangt. Die Verweilzeit in der Sedimentations-Einrichtung sollte in Abhängigkeit von der Qualität des Wassers ca. 1 bis 1 1/2 Stunden betragen. Zur Überprüfung der Qualität des geklärten Wassers dienen in die Leitung E geschaltete Meßgeräte üblicher Bauweise, z. B. eine pH-Sonde.

Der sich in der Sedimentations-Einrichtung 4 ansammelnde Schlamm wird von Zeit zu Zeit in einen Behälter 12 überführt, wo die im Schlamm befindlichen Farben unter ständigem Rühren mit Chlor oxidiert werden, das aus einem Vorratsbehälter 13 zugeführt wird. Nach Beendigung der Oxidation wird der Rührer abgeschaltet, so daß sich der Schlamm am Boden des Behälters 12 sammelt. Das dadurch frei gewordene Wasser wird über eine Leitung, die sich in einer mittleren Höhe des Behälters 12 befindet, einer erneuten Benutzung im Becken 1 zugeführt. Der Schlamm wird dagegen teilweise erneut dem Verarbeitungsprozeß zugeführt, während der restliche Schlamm über eine Ableitung F in einen Container 15 geleitet und dann zum Ablagerplatz transportiert wird. Der erneut verwendete Teil des Schlamms wird mittels einer Pumpe 14 dem Gefäß 5 zugeführt und dort mit frischem Flockungs- und Adsorptionsmittel vermischt, wobei beispielsweise ein Verhältnis von 2/3 Schlamm zu 1/3 der jeweiligen Rohstoffe eingehalten wird. Der abgelagerte Teil des Schlamms braucht nicht auf einer Spezialdeponie gelagert werden, weil er durch Regen od. dgl. nicht in das Grundwasser überführt werden kann.

Aufgrund von Versuchen an einer Pilotanlage wurde festgestellt, daß für eine Adsorption der im Abwasser gelösten Bestandteile 2-4 g/Liter ausreichend sind. Außerdem wurde festgestellt, daß die Ausbeute bei der Adsorption steigt bzw. geringere Mengen an Flockungs- und Adsorptionsmitteln verwendet werden können, wenn eine Mischung der genannten Stoffe verwendet wird.

Die im Einzelfall benötigten Mengen der genannten Stoffe und Materialien sind von der Belastung der Abwässer abhängig. Das erfindungsgemäße Verfahren bietet jedoch den Vorteil, daß es sehr ergiebig ist. So entstehen beispielsweise in einem Textilbetrieb, der stark verfärbte Abwässer abgibt, nur etwa 500-600 kg Schlamm auf 100 m³ Abwasser. Dabei wird die Menge des abzulagernden Schlamms, wie beschrieben, dadurch klein gehalten, daß die in ihm enthaltenen Farbstoffe und anderen organischen Substanzen mit Chlor oxidiert werden und der Schlamm dann durch den Zusatz von Säuren erneut aktiviert wird. Hierdurch läßt sich eine Herabsetzung des Schlamms um 60-70 % erreichen.

Untersuchungen an einer Pilotanlage erbrachten bei Anwendung des « Jartests » die folgenden Ergebnisse :

a) Das geklärte Wasser besitzt einen pH-Wert von 8,0 bis 8,5, was im tolerierten Bereich von 6,5 bis 9,0 liegt.

b) Die Lichttransparenz T% bei 540 mm, mit dem Spektrometer gemessen, vergrößerte sich von 6,6 % im Abwasser auf 95 % im geklärten Wasser. Dieser Wert ist zugleich die wichtigste Größe in bezug auf eine Bewertung der Ausscheidung von Farbstoffen.

c) Der chemische Sauerstoffverbrauch CSB verringerte sich durch die Oxidation mit Bichromat von 1 400 mg/Liter auf durchschnittlich 163 mg/Liter, d. h. um 88,4 %.

d) Der Verbrauch an $KMnO_4$ verringerte sich von 932 mg/Liter auf durchschnittlich 66 mg/Liter, d. h. um 93 %.

e) Ein fünftägiger Sauerstoffverbrauch BSB 5 ist kleiner als 20 mg/Liter, was eine Verringerung von mehr als 95 % bedeutet.

f) Der Gehalt an Waschmitteln verringerte sich von 810 mg/Liter auf durchschnittlich 28 mg/Liter, was einer Verringerung um 96,5 % bedeutet.

Aus diesen Versuchsergebnissen folgt, daß mit dem erfindungsgemäßen Verfahren eine wirkungsvolle Klärung erzielt wird.

Insbesondere zeigen dies die für die Farbstoffe und Waschmittel erzielten Ergebnisse, da diese Stoffe die wichtigsten Verschmutzer der Abwässer von Textilbetrieben darstellen.

## Patentansprüche

1. Verfahren zur Klärung von gefärbten Abwässern, z. B. Abwässern der Textilindustrie oder ähnlicher Industriebetriebe, die sowohl feine dispergierte Teilchen wie Textilfasern od. dgl. als auch in Wasser gelöste organische Substanzen wie z. B. Farbstoffe, Waschmittel od. dgl. enthalten, dadurch gekennzeichnet, daß die Abwässer mit einem durch eine Säure aktivierten Flockungs- und Adsorptionsmittel, bestehend aus Tonerde oder einem Gemisch von Tonerde und Bauxit oder dem bei der Elektrolyse von Aluminium anfallenden Schlamm oder einem Gemisch dieses Schlamms und Tonerde in einer Stufe behandelt, in der die Koagulation und die Adsorption der im Abwasser suspendierten Teilchen und der gelösten Substanzen gleichzeitig ablaufen, und dann die geklärten Abwässer von dem die suspendierten und gelösten Stoffe des Abwassers enthaltenden dickflüssigen Schlamm in einer Sedimentations-Einrichtung entfernt werden.

2. Verfahren nach Anspruch 1, dadurch gekennzeichnet, daß das Flockungs- und Adsorptionsmittel mit einer Säure aktiviert und der pH-Wert der damit vermischten Abwässer mit einer Lauge optimiert wird.

3. Verfahren nach Anspruch 1 oder 2, dadurch gekennzeichnet, daß das Flokkungs- und Adsorptionsmittel mit Salz- oder Schwefelsäure unter ständigem Rühren aktiviert und der pH-Wert der damit vermischten Abwässer mit Kalk oder Natronlauge optimiert wird.

4. Verfahren nach wenigstens einem der Ansprüche 1 bis 3, dadurch gekennzeichnet, daß der pH-Wert der Mischung aus Abwässern und dem aktivierten Flockungs- und Adsorptionsmittel mit einer wässrigen Kalksuspension auf ca. 8,5 eingestellt wird.

5. Verfahren nach wenigstens einem der Ansprüche 1 bis 4, dadurch gekennzeichnet, daß die Abwässer wenigstens etwa 15 Minuten mit dem Flockungsund Adsorptionsmittel behandelt und dann der Sedimentations-Einrichtung (4) zugeführt werden.

6. Verfahren nach wenigstens einem der Ansprüche 1 bis 5, dadurch gekennzeichnet, daß der bei der Sedimentation erhaltene Schlamm nach Oxidation der in ihm enthaltenen Stoffe teilweise in den Verarbeitungsprozeß zurückgeführt und zusammen mit frischem Flockungs- und Adsorptionsmittel neu aktiviert wird.

## Claims

1. Process for clarifying coloured waste water, e. g. waste water from the textile industry or similar industrial operations, which contains both finely dispersed particles such as textile fibres or the like as well as organic substances. e. g. dyestuffs, detergents or the like, dissolved in water, characterized in that the waste water is treated in one stage with a coagulating and adsorption agent activated by an acid, consisting of clay or a mixture of clay and bauxite or the slurry residue from the electrolysis of aluminium or a mixture of this slurry and clay, in which the coagulation and the adsorption of the particles suspended in the water and of the dissolved substances take place at the same time, and then the clarified waste water is removed from the viscous slurry containing the suspended and dissolved substances of the waste water in a sedimentation device.

2. Process according to claim 1, characterized in that the coagulating and adsorption agent is activated with an acid and the pH-value of the waste water mixed therewith is optimised with a lye.

3. Process according to claim 1 or 2, characterized in that the coagulating and adsorption agent is activated with hydrochloric or sulphuric acid with constant stirring and the pH-value of the waste water mixed therewith is optimised with chalk or soda.

4. Process according to at least one of claims 1 to 3, characterized in that the pH-value of the mixture of waste water and the activated coagulating and adsorption agent is adjusted to about 8.5 with an aqueous chalk suspension.

5. Process according to at least one of claims 1 to 4, characterized in that the waste water is treated for at least about 15 minutes with the coagulating and adsorption agent and is then fed to the sedimentation device (4).

6. Process according to at least one of claims 1 to 5, characterized in that the slurry obtained from the sedimentation is, after oxidation of the matter contained therein, partially fed back to the treatment process and newly activated together with fresh coagulating and adsorption agent.

**Revendications**

1. Procédé de clarification d'eaux usées colorées, par exemple, d'eaux usées provenant de l'industrie textile ou d'installations industrielles similaires, qui contiennent aussi bien des particules fines dispersées comme des fibres textiles ou similaires que des substances organiques dissoutes dans l'eau comme, par exemple, des colorants, des détergents ou similaires, caractérisé en ce que les eaux usées sont traitées à l'aide d'un agent de floculation et d'adsorption activé par un acide, agent composé d'argile ou d'un mélange d'argile et de bauxite ou de la boue résultant de l'électrolyse de l'aluminium ou d'un mélange de cette boue et d'argile dans une étape dans laquelle la coagulation et l'adsorption des particules en suspension dans l'eau et des substances dissoutes se produisent simultanément, et en ce qu'ensuite les eaux usées sont séparées, dans un dispositif de sédimentation, de la boue visqueuse contenant les matières en suspension et en solution des eaux usées.

2. Procédé selon la revendication 1, caractérisé en ce que l'agent de floculation ou d'adsorption est activé à l'aide d'un acide et en ce que la valeur du pH des eaux usées mélangées avec lui est optimisée à l'aide d'une lessive alcaline.

3. Procédé selon la revendication 1 ou 2, caractérisé en ce que l'agent de floculation et d'adsorption est activé à l'aide d'acide chlorhydrique ou d'acide sulfurique sous agitation constante, et en ce que la valeur du pH des eaux usées qui lui sont mélangées est optimisée à l'aide de lessives calciques ou sodiques.

4. Procédé selon l'une des revendications 1 à 3, caractérisé en ce que la valeur du pH du mélange des eaux usées et de l'agent de floculation et d'adsorption est réglée à environ 8,5 à l'aide d'une suspension aqueuse de chaux.

5. Procédé selon l'une des revendications 1 à 4, caractérisé en ce que les eaux usées sont traitées au moins environ 15 minutes à l'aide de l'agent de floculation et d'adsorption et sont ensuite amenées au dispositif de sédimentation (4).

6. Procédé selon l'une au moins des revendications 1 à 5, caractérisé en ce que la boue formée lors de la sédimentation est partiellement renvoyée, après oxydation des matières qu'elle contient, dans le processus de traitement et qu'elle est à nouveau activée avec un agent de floculation et d'adsorption frais.

EP 0 169 430 B1

C

D

9

D

10

11

16

A

3

1

2

E

4

8

13

B

5

12

6

7

F

14

15